# EUROPEAN PATENT APPLICATION

(11) **EP 1 759 680 A1**
(43) Date of publication of application: **07.03.2007**
(21) Application number: 06017514.8
(22) Date of filing: 23.08.2006
(51) Int. Cl.: A61J 9/02

(54) **Electronic temperature-display feeding bottle**

(30) Priority: 30.08.2005 CN 200520063625 U
(71) Applicant: LIU, Wei Jung, 64016 Sant'egidio alla Vibrata TE (IT)
(72) Inventor: LIU, Wei Jung, 64016 Sant'egidio alla Vibrata TE (IT)
(74) Representative: Baldi, Claudio

(57) **Abstract**

This patent application relates to the technical field of infant articles, and here it refers to a new type of electronic temperature-display feeding bottle. It is mainly composed of a bottle body (1), bottom seat (2), nipple (3) and cover (4). The bottle body is bolted to the bottom seat, the upper end of the bottle is provided with a nipple, and the cover is bolted to the upper opening of the bottle body. At the central and lower parts of the bottle body is a groove (11) where there is a retaining bracket (6) in which a thermometer case can be installed. In the middle of the retaining bracket is a dovetail groove (61) to which the thermometer case (5) is stuck. In the thermometer case, there is a circuit board which is able to process and display temperatures. Between the bottle bottom and the bottom seat, a temperature probe is mounted, the lead of which connects the temperature probe to the circuit board.

## Description

### Technology Field

This invention relates to the technical field of infant articles, and here it refers to a new type of electronic temperature-display feeding bottle.

### Background

A feeding bottle is a necessity for feeding a baby. When feeding a baby with milk, the baby's mouth may be scalded as it is impossible to have accurate command of the temperature of food inside the feeding bottle. To prevent the danger caused to the body of a baby, an electronic temperature-display. The utility model (patent number: 00225108.6) makes public an electric temperature-display feeding bottle with the temperature figure display. It is mainly composed of a nipple, bottle cover, bottle body, and electronic thermometer between central and lower parts of the bottle. Through the bottle wall, the probe directly contacts the food inside the bottle, and there is a temperature digit display on the front of the electronic thermometer.

However, the electronic temperature-display feeding bottle has the following disadvantages:
1. As the electronic thermometer is fastened to the nipple securely, it is very easily damaged when the feeding bottle is sterilized in various forms, causing inaccurate or unable temperature measurement.
2. The thermometer of this feeding bottle must have water-proof design, causing complicated production technology and low eligibility. When a battery uses up its power, the user is unlikely to change the battery independently, resulting in invalidity of temperature measurement.
3. With regard to this electronic temperature-display feeding bottle, its probe is impossible to reach the food inside the bottle directly, and so temperature can only be detected through the bottle wall. Because the temperature-sensing probe fails to contact the food directly, it is impossible to accurately measure the real temperature of the food.

Larger hidden trouble caused by the aforesaid factors to product safety may bring unfavorable influence on the health of baby bodies.

### Detail Descriptions

In light of the shortcomings of existing technology, this utility model provides a new type of electronic temperature-display feeding bottle which is characterized by simple structure, convenient production, installation and disassembly, easy disinfection and cleaning and safety.

The new type of electronic temperature-display feeding bottle, mainly composed of a bottle body, bottom seat, nipple and cover. The bottle body is bolted to the bottom seat, the upper end of the bottle is provided with a nipple, and the cover is bolted to the upper opening of the bottle body. At the central and lower parts of the bottle body is a groove where there is a retaining bracket in which a thermometer case can be installed. In the middle of the retaining bracket is a dovetail groove to which the thermometer case is stuck. In the thermometer case, there is a circuit board which is able to process and display temperatures. Between the bottle bottom and the bottom seat, a temperature probe is mounted, the lead of which connects the temperature probe to the circuit board.

The said thermometer case includes a thermometer back cover, circuit board, thermometer panel and LCD display, the thermometer back cover mounted in the dovetail groove of the retaining bracket, between the thermometer panel and thermometer back cover there being a circuit board which can process and display temperature signals transferred by the probe, between the circuit board and thermometer panel being a LCD display, and on the thermometer panel being provided with a transparent casing and a keying switch to control the circuit of the circuit board.

At the said bottom is a probe hole, through which the temperature probe can directly extend into the bottle body. Between the temperature probe and bottle body, there is a silicon rubber gasket.

The said thermometer back cover is provided with a metal elastic strip, there exists a metal contact in the center of the retaining bracket, the probe lead is connected to the metal contact, the metal elastic strip contacts the metal contact, and the other end of the metal elastic strip is linked with the circuit board electrically.

Characterized by simple structure, convenient production, installation and disassembly, easy disinfection and cleaning and accurate temperature measurement, this utility model is able to ensure the safety of infant feeding to a greater extent.

### Descriptions of Figures

Fig. 1 represents a structural diagram of the appearance of the utility model
Fig. 2 is a structural exploded view of the utility model

### Method of Detail Implementation

The following are only preferred embodiments, which are not used to limit the range of protecting this utility model.

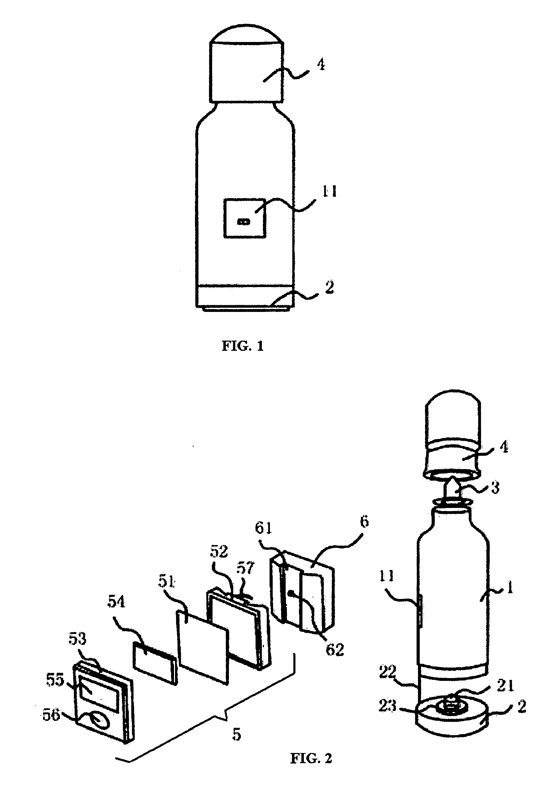

By referring to Fig. 1 and Fig. 2, this new type of electronic temperature-display feeding bottle is mainly composed of a bottle body 1, bottom seat 2, nipple 3 and cover 4. The bottle body 1 is bolted to the bottom seat 2, the upper end of the bottle is provided with the nipple 3, and the cover 4 is bolted to the upper opening of the bottle body 1. The bottle body 1 can be constructed of plastic or glass, at the central and lower parts of the bottle body 1 is a groove 11 where there is a retaining bracket 6 in which a thermometer case 5 can be installed. In the middle of the retaining bracket 6 is a dovetail groove 61 to which the thermometer case 5 is stuck. In the thermometer case 5, there is a circuit board 51 which is able to process and display temperatures. Between the bottom of bottle (1) and the bottom seat 2, a temperature probe 21 is mounted, the lead 22 of which connecting the temperature probe 21 to the circuit board 51.

The said thermometer case 5 includes a thermometer back cover 52, circuit board 51, thermometer panel 53 and LCD display 54, the thermometer back cover 52 mounted in the dovetail groove 61 of the retaining bracket 6, between the thermometer panel 53 and thermometer back cover 52 there being a circuit board 51 which can process and display temperature signals transferred by the probe lead 22, between the circuit board 51 and thermometer panel 53 being a LCD display 54, and the thermometer panel 53 being provided with a transparent casing 55 and a keying switch 56 to control the circuit of the circuit board. On the circuit board 51 there is a micro-battery which provides power to the entire temperature measuring system.

The said bottom 1 is provided with a probe hole, through which the temperature probe 21 can directly extend into the bottle body 1. Between the temperature probe 21 and bottle body 1, there is a silicon rubber gasket 23. This can ensure accurate detection of information on the temperature of liquid in the bottle body 1, easy disassembly and no liquid leakage.

The said thermometer back cover 52 is provided with a metal elastic strip 57, there exists a metal contact 62 in the center of the retaining bracket 6, the probe lead 22 is connected to the metal contact 62, the metal elastic strip 57 contacts the metal contact 62, and the other end of the metal elastic strip 57 is linked with the circuit board 51 electrically. This structure facilitates the disassembly, cleaning and sterilization of the thermometer case 5 and ensures the entire temperature measuring system to be free from any damage.

Its working principle is that, the temperature probe 21 extends into the bottle body 1 and delivers the temperature signal of the liquid inside the bottle body 1 to the microprocessor on the circuit board 51, which converts measurement information into a digital signal and delivers it to the digital display circuit, the signal to be shown on the LCD display 54. Not in use, shut off the entire temperature measuring system by pressing the switch 56 to prolong the service life of the micro-battery.

In general, characterized by simple structure, convenient production, installation and disassembly, resistance to damage and accurate temperature measurement, this utility model is suitable for various kinds of disinfection and able to ensure the safety of infant feeding to a greater extent, so it should be promoted on a large scale.

## Claims

1. Electronic temperature-display feeding bottle, mainly composed of a bottle body (1), a bottom seat (2), a nipple (3) and a cover (4). The bottle body (1) is bolted to the bottom seat (2), the upper end of the bottle is provided with the nipple (3), and the cover (4) is bolted to the upper opening of the bottle body (1). A groove (11) is provided at the central and lower parts of the bottle body (1), said groove (11) having a retaining bracket (6) in which a thermometer case (5) can be installed. In the middle of the retaining bracket (6) is a dovetail groove (61) to which the thermometer case (5) is stuck. In the thermometer case (5), there is a circuit board (51) which is able to process and display temperatures. Between the bottle bottom and the bottom seat (2), a temperature probe (21) is mounted, the lead (22) of which connects the temperature probe (21) to the circuit board (51).

2. Electronic temperature-display feeding bottle according to claim 1, wherein the said thermometer case (5) includes a thermometer back cover (52), a circuit board (51), a thermometer panel (53) and a LCD display (54), the thermometer back cover (52) being mounted in the dovetail groove (61) of the retaining bracket (6), between the thermometer panel (53) and the thermometer back cover (52) there being the circuit board (51) which can process and display temperature signals transferred by the probe lead (22), between the circuit board (51) and thermometer panel (53) there being the LCD display (54), and the thermometer panel (53) being provided with a transparent casing (55) and a keying switch (56) to control the circuit of the circuit board (51).

3. Electronic temperature-display feeding bottle according to claim 1, wherein the said bottom is provided with a probe hole, through which the temperature probe (21) can directly extend into the bottle body (1). Between the temperature probe (21) and the bottle body (1), there is a silicon rubber gasket (23).

4. Electronic temperature-display feeding bottle according to claim 1 and 2, wherein the said thermometer back cover (52) is provided with a metal elastic strip (57), a metal contact (62) being in the center of the retaining bracket (6), the probe lead (22) being connected to the metal contact (62), the metal elastic strip (57) contacting the metal contact (62), and the other end of the metal elastic strip (57) being connected to the circuit board electrically.
